# EUROPÄISCHE PATENTANMELDUNG

(11) **EP 1 238 953 A1**
(43) Veröffentlichungstag der Anmeldung: **11.09.2002**
(21) Anmeldenummer: 02005220.5
(22) Anmeldetag: 07.03.2002
(51) Int. Cl.: C04B 35/569, F16C 33/04, C04B 35/575

(54) **Verbundwerkstoff auf der Basis von Siliciumcarbid und Kohlenstoff, Verfahren zu seiner Herstellung sowie seine Verwendung**

(30) Priorität: 08.03.2001 DE 10111225
(71) Anmelder: Wacker-Chemie GmbH, 81737 München (DE)
(72) Erfinder: Lesniak, Christoph, Dr., 87474 Buchenberg (DE); Sigl, Lorenz, Dr., 6600 Lechaschau (AT); Kayser, Armin, 87474 Buchenberg (DE)
(74) Vertreter: Potten, Holger

(57) **Zusammenfassung**

Keramischer Verbundwerkstoff einer Dichte > 90 % der theoretischen Dichte auf Basis von SiC und Kohlenstoff mit einem Siliciumcarbidanteil zwischen 99,9 Gew.% und 70 Gew.% und einem Kohlenstoffanteil zwischen 0,1 Gew.% und 30 Gew.%, wobei das SiC ein Mikrogefüge mit einer bimodalen Kornstruktur besitzt, dadurch gekennzeichnet, daß
(a) die mittlere Korngröße aller SiC-Körner > 10 µm beträgt
(b) die bimodale äquiaxiale Kornstruktur des SiC-Mikrogefüges gebildet wird aus einer Feinkornfraktion mit einer mittleren Korngröße von < 10 µm und einem Anteil zwischen 10 und 50 Flächenprozent und einer Grobkornfraktion mit einer mittleren Korngröße zwischen 10 und 1000 µm und einem Anteil zwischen 50 und 90 Flächenprozent jeweils gemessen auf einer polierten, ebenen Schlifffläche und daß
(c) der Kohlenstoff eine mittlere Korngröße von < 10 µm besitzt.

## Beschreibung

Die Erfindung betrifft einen Verbundwerkstoff auf der Basis von Siliciumcarbid und Kohlenstoff, Verfahren zu seiner Herstellung sowie seine Verwendung.

Dichtes gesintertes SiC zeichnet sich durch hohe Härte, Hochtemperaturfestigkeit, hohe Wärmeleitfähigkeit, Thermoschockund Oxidationsbeständigkeit, sowie hohen Abrasions- und Korrosionswiderstand aus. Es zeigt außerdem ein besonders gutes tribologisches Verhalten, worunter das Reibungs- und Verschleißverhalten mit und ohne Schmierung zu verstehen ist. Aus diesem Grunde hat sich gesintertes SiC als nahezu idealer Werkstoff für verschleißbeanspruchte Gleitlager und insbesondere Gleitringdichtungen eingeführt und in diesen Anwendungen andere Werkstoffe wie z.B. Aluminiumoxid oder Hartmetall verdrängt. So werden Gleitringdichtungen und Gleitlager aus gesintertem Siliciumcarbid (SSiC) bereits seit Ende der 70er Jahre in Pumpen, die starken korrosiven und abrasiven Verschleißbeanspruchungen unterliegen, erfolgreich eingesetzt. Dichtes gesintertes SiC besitzt eine hohe Reinheit von typischerweise ≥ 98 Gew.% SiC und weist eine Sinterdichte von typisch > 3,10 g/cm³, entsprechend einer Restporosität von < 3 Vol.% auf. Dank seiner hohen Härte ist gesintertes SiC außergewöhnlich widerstandsfähig gegenüber Verschleiß durch Feststoffpartikel, die in flüssigen Medien mitgeführt werden. Selbst bei einer Kombination von abrasivem und korrosivem Verschleiß ist dieser keramische Werkstoff beständig. Aufgrund der universellen Korrosionsbeständigkeit, dem außergewöhnlich hohen Verschleißwiderstand und den guten tribologischen Eigenschaften konnten mit dicht gesintertem SiC eine Vielzahl von Lager- und Dichtungsproblemen gelöst werden.

Viele in der Praxis auftretende Gleitverschleißprobleme sind auf Unterbrechung der idealen, d.h. ordentlich geschmierten Laufbedingungen zurückzuführen. Dabei kommen die Gleitflächen der betreffenden Lager oder Dichtungen miteinander in Kontakt und es entsteht eine Festkörper- oder Trockenreibung, die sich in einer stark erhöhten Steigerung des Reibwertes ausdrückt und zu Temperaturspitzen führt.

Für den Einsatz unter derartig erschwerten Bedingungen ist reines SiC nicht optimal geeignet. Für diese Anwendungsfälle wurden modifizierte SiC-Werkstoffe entwickelt, die durch geeignete Gestaltung der Funktionsflächen auch bei kurzzeitigem Mischreibungs- und Trockenlauf noch eine ausreichende Stabilisierung des hydrodynamischen Schmierfilms gewährleisten. Aus der Patentliteratur sind verschiedene SiC-Werkstoffe mit definiert eingebrachten Poren bekannt.

So wird in DE 3 927 300 (entspricht US 5080378) poröses SSiC mit 4 bis 14 Vol. -% kugelförmigen Makroporen einer mittleren Porengröße von 10 bis 40 µm offengelegt. EP 486 336 (entspricht US 5610110) beschreibt ein poröses SSiC mit 4 bis 18 Vol. % kugelförmigen Makroporen einer mittleren Porengröße von 60 bis 200 µm und US 5 395 807 legt ein Verfahren zur Herstellung von grobporigem SSiC offen, das 2 bis 12 Vol. % kugelförmige Poren einer Porengröße zwischen 50 bis 500 µm besitzt. In EP 685 437 (entspricht US 5762895) wiederum ist ein Gleitwerkstoff aus porösem SiC mit trimodaler Porenzusammensetzung mit 3 bis 10 Vol. % geschlossenen Poren beschrieben. In allen genannten SSiC-Werkstoffen wirken die Poren als Mikroschmiertaschen in der Gleitfläche. Bei kurzzeitigem Zusammenbrechen des hydrodynamischen Schmierfilms ist durch sie noch eine Restschmierung möglich.

Weiterhin ist bekannt, daß durch das Einbringen von Gefügebestandteilen, die als Festschmierstoff wirksam sind, z.B. Grafit oder hexagonales Bornitrid, ein deutlich verbessertes Laufverhalten in dynamischen Gleitringdichtungen erzielt werden kann. Dieses Verhalten gilt insbesonders in sogenannten hart/hart-Paarungen (Gleitringdichtungen in denen ein SiC-Gleitring gegen einen SiC-Gegenring läuft), die bei hohen Druckdifferenzen unter Misch- und Grenzreibungsbedingungen laufen. Werkstoffe die aus SiC und feststoffschmierenden Gefügebestandteilen bestehen sowie Verfahren zu ihrer Herstellung sind in der Patentliteratur mehrfach beschrieben worden.

US 4 525 461 beschreibt einen Werkstoff bestehend aus SiC, Grafit und Kohlenstoff mit 1 bis 13% Grafit, der durch ein feinkörniges SiC- und Grafit-Gefüge gekennzeichnet ist, d.h. durch eine SiC- bzw. Grafitkorngröße die für beide Gefügebestandteile ≤ 10 µm beträgt.

In DE 3329225 wird ein Gleitwerkstoff auf SiC-Basis mit 1 bis 10 Vol. % BN, Grafit und/oder Ruß und einer mittleren SiC-Korngröße ≤ 200 µm offengelegt, wobei die zweite Phase ausschließlich entlang den SiC-Korngrenzen dispergiert ist. Vorzugsweise besitzt dieser Werkstoff eine mittlere SiC-Korngröße ≤ 50 µm, und 5 bis 10 Vol. % Grafit.

EP 709 352 legt einen praktisch porenfreien Formkörper offen, der aus SiC (≥ 95 % der theoretischen Dichte) und aus 7 bis 30 Vol.% Festschmierstoff in Form von Grafit, Ruß oder BN besteht, wobei der Festschmierstoff eine Korngröße von > 20 bis 500 µm besitzt und der Anteil an Festschmierstoff mit einer Korngröße > 100 µm mindetens 5 Vol.% des Formkörpers ausmacht.

WO 94/18141 (entspricht US 5656563) beschreibt ein Verfahren zur Herstellung von SiC-Werkstoffen mit einer Sinterdichte ≥ 80 % der theoretischen Dichte, mit einer mittleren SiC-Korngröße von 2 bis 15 µm, einer mittleren Grafit-Korngröße von 10 bis 75 µm, wobei die Grafit-Korngröße immer größer als SiC-Korngröße ist.

WO 95/23 122 (entspricht US 5580834) beschreibt einen drucklos gesinterten SiC-Werkstoff mit 5 bis 50 % Grafit und 8 bis 30 % Poren, die nachträglich mit einem Kohlenstoffprecursor, Harz, Teflon oder Metallen imprägniert werden. Diese porösen SiC-Werkstoffe besitzen eine bevorzugte Sinterdichte von 2,10 bis 2,60 g/cm³ und bestehen aus 50 bis 95 % SiC mit einer mittleren Korngröße von 10 bis 25 µm und aus 50 bis 5 % Kohlenstoff mit einer mittleren Korngröße von 75 bis 125 µm.

In US 5 639 407 ist ein poröses SSiC mit 5 bis 20 % Grafit mit einer Sinterdichte von mindestens 2,8 g/cm³ und einer Biegefestigkeit > 180 MPa offengelegt, wobei die Grafitpartikel eine mittlere KG ≥ 100 µm besitzen.

Die beschriebenen SiC-Werkstoffvarianten mit eingelagerten feststoffschmierenden Bestandteilen für tribologische Anwendungen besitzen verschiedene Nachteile. Besonders nachteilig ist, daß die beschriebenen feinkörnigen SiC-Werkstoffe aufgrund ihrer hohen spezifischen Korngrenzenfläche eine verminderte Korrosionsstabilität in wässrigen Medien besitzen, besonders dann, wenn sie in wässrigen Medien bei erhöhter Temperatur, z.B. in heißem Wasser eingesetzt werden.

Außerdem sind SiC-Werkstoffe, die hohe Mengen an grobkörnigen Festschmierstoffpartikeln enthalten, z.B. in Form von partikulärem Kohlenstoff oder Bornitrid, schwierig über die bekannten pulvertechnologischen Verfahrensschritte zu verarbeiten. Die prozeßtechnischen Schwierigkeiten beginnen beim Pressen, wo grobe Feststoffpartikel die Tendenz verstärken bei der Entlastung nach dem Preßvorgang wegen ihres von den SiC-Granulaten verschiedenen Auffederungsverhaltens Risse im Grünkörper zu bilden (siehe Vergleichsbeispiel 2). Beim Sintern behindern die Feststoffpartikel die Schrumpfung des Körpers beim Sinterprozeß und erschweren bzw. verhindern dadurch die Herstellung porenarmer Sinterkörper. Beide Effekte stellen große Probleme bei der Herstellung kostengünstiger SiC-Sinterkörper mit feststoffschmierenden Partikel dar.

Ausgehend vom dargestellten Stand der Technik ist es eine Aufgabe der vorliegenden Erfindung, einen keramischen Verbundwerkstoff der eine Dichte > 90 % der theoretischen Dichte aufweist auf Basis von SiC und Kohlenstoff zur Verfügung zu stellen, der die oben beschriebenen Nachteile nicht zeigt.

Die gestellte Aufgabe wird gelöst durch einen Werkstoff mit einem Siliciumcarbidanteil zwischen 99,9 Gew.% und 70 Gew.% und einem Kohlenstoffanteil zwischen 0,1 Gew.% und 30 Gew.%, wobei das SiC ein Mikrogefüge mit einer bimodalen Kornstruktur besitzt, dadurch gekennzeichnet, daß
(a) die mittlere Korngröße aller SiC-Körner eine mittlere Korngröße > 10 µm beträgt
(b) die bimodale Kornstruktur des SiC-Mikrogefüges gebildet wird aus einer äquiaxialen Feinkornfraktion mit einer mittleren Korngröße von < 10 µm und einem Anteil zwischen 10 und 50 Flächenprozent und einer Grobkornfraktion mit einer mittleren Korngröße zwischen 10 und 1000 µm und einem Anteil zwischen 50 und 90 Flächenprozent jeweils gemessen auf einer polierten, ebenen Schlifffläche und daß
(c) der Kohlenstoff eine mittlere Korngöße von < 10 µm besitzt.

Äquiaxial sind im Sinne der vorliegenden Erfindung vorzugsweise Teilchen eines Streckungsgrades von 1:1 bis 1:2.

Alle Angaben zur Korngröße im erfindungsgemäßen Formkörper wurden nach dem Linienschnittverfahren ermittelt. Als relative Dichte wird das Verhältnis zwischen tatsächlicher Dichte und theoretisch maximal möglicher Dichte definiert. Als grobkörnig werden Teilchen mit einer Korngröße > 10 µm bezeichnet.

Die äquiaxiale Feinkornfraktion besitzt vorzugsweise eine Größenverteilung der SiC-Partikel zwischen 0,5 und 15 µm. Die SiC-Grobkornfraktion besteht vorzugsweise aus plattenförmigen Körnern mit einem Streckungsgrad > 3, vorzugsweise >5, so daß diese Körner im Innern des Gefüges verankert sind. Durch die groben Körner des Gefüges wird die spezifische Korngrenzenfläche reduziert, so daß weniger Angriffsflächen für elektrochemische Korrosion vorhanden sind. Die SiC-Grobkornfraktion hat vorzugsweise eine maximale Korngröße von 1500 µm.

Die Kohlenstoffpartikel besitzen vorzugsweise eine äquiaxiale Form und sind vorzugsweise an den SiC-Korngrenzen (intergranular) oder im Inneren von SiC-Körnern (intragranular) angeordnet. Die Bindung des Kohlenstoffs in der umgebenden SiC Matrix ist so stark, daß die Einschlüsse dem Herausreißen auch harten mechanischen Beanspruchungen wie sie z.B. beim Bearbeiten (Läppen, Schleifen, Ultraschall) oder während der Bauteilbeanspruchung auftreten widerstehen und im Gefüge fest eingebunden bleiben.

Der Kohlenstoffanteil im erfindungsgemäßen Verbundwerkstoff liegt vorzugsweise zwischen 2 und 10 Gew.%, besonders bevorzugt zwischen 5 und 8 Gew.%. Weiterhin bevorzugt ist es, wenn der Kohlenstoffanteil > 13 Gew.% bis zu 30 Gew.% beträgt. Vorzugsweise handelt es sich bei dem Kohlenstoff um Grafit.

Kennzeichnend für diesen Kohlenstoff ist, daß er in der Regel als kristalliner Grafit ausgebildet ist, mit einer mittleren Korngröße, die kleiner als die mittlere Korngröße des Grobkornanteils des SiC-Gefüges ist und vorzugsweise der mittleren Korngröße des Feinkornanteils des SiC-Gefüges entspricht.

Vorzugsweise besitzt der erfindungsgemäße Verbundwerkstoff eine relative Dichte > 93 % der theoretischen Dichte, besonders bevorzugt > 95% der theoretischen Dichte. Die theoretische Dichte errechnet sich dabei aus der linearen Mischungsregel unter Berücksichtigung aller im Sinterkörper vorhandenen Komponenten (SiC, Grafit, amorpher Kohlenstoff, Sinterhilfsmittel).

Der erfindungsgemäße Werkstoff kombiniert die Vorteile der Feststoffschmierung durch Kohlenstoffpartikel mit einer Verbesserung des Korrosionswiderstands durch verminderte spezifische SiC-Korngrenzenfläche in Folge der erhöhten SiC-Korngröße. Er vermeidet durch Verwendung eines feinkörnigen Festschmierstoffs in Form von feinkörnigem Kohlenstoff die genannten prozeßtechnischen Nachteile während der Herstellung, d.h. beim Pressen und Sintern. Die Vorteile des Festkörperschmierstoffs bleiben dagegen trotz der feinkörnigen Ausprägung des Kohlenstoffs erhalten.

Der erfindungsgemäße Werkstoff wird beispielsweise dadurch hergestellt, daß aus einem kristallinen SiC Pulver (α- oder β-SiC) und Wasser ein wässeriger Schlicker hergestellt wird, dem ein Kohlenstoffträger, z.B. Grafitpulver oder Grafitprecursoren in einer derartigen Konzentration zugesetzt wird, daß im fertigen Sinterkörper zwischen 1 und 30 Gew.% Kohlenstoff vorhanden sind und die für die Drucklossinterung von SiC gebräuchlichen Sinterhilfsmittel und ggf. organischen Hilfsstoffe in den üblichen Mengen zugefügt werden, aus diesem Schlikker durch eine übliche Granulationsmethode wie z.B. Sprühtrocknen ein Granulat erzeugt wird und aus dem Granulat über bekannte Formgebungstechniken ein Formkörper hergestellt wird, der zur Einstellung des erfindungsgemäßen Zielgefüges drucklos gesintert wird.

Die Aufbereitung des Schlickers mit Wasser wird gezielt zur optimalen Homogenisierung bzw. zur gleichmäßigen Verteilung der verschiedenen Komponenten eingesetzt.

Überraschenderweise hat sich gezeigt, daß bei den zur Herstellung eines bimodalen SiC Gefüges notwendigen Sinterbedingungen der partikuläre Kohlenstoff nicht sinterhemmend wirkt, und der erfindungsgemäße SiC-Kohlenstoff-Kompositwerkstoff mit hoher relativer Dichte durch druckloses Sintern hergestellt werden kann.

Durch die Wahl geeigneter Sinterbedingungen lassen sich Formkörper mit einem nahezu porenfreien, bimodalen erfindungsgemäßen SiC Gefüge in das die Kohlenstoffteilchen fest eingebunden sind (inter- und intragranular), durch druckloses Sintern herstellen. Geeignete Sinterbedingungen sind dadurch gekennzeichnet, daß die auf Raumtemperatur abgekühlten entbinderten Formkörper in Graphittiegel eingebaut werden, die wiederum in die Heizzone eines Graphitrohrofens eingesetzt werden. Diese Grafittiegel werden vorzugsweise bei einem Unterdruck zwischen 100 und 980 mbar mit einer Aufheizgeschwindigkeit zwischen 25 und 500 °C/h auf eine Sintertemperatur ≥ 2100°C aufgeheizt und bei dieser Temperatur zwischen 15 und 120 min. gehalten. Bei der Sinterung wird darauf geachtet, das Gefüge nicht übermäßig zu vergröbern, vorzugsweise beträgt die mittlere Korngröße des Grobkornanteils < 200 µm.

Als Ausgangsmaterial zur Herstellung des erfindungsgemäßen Werkstoffs dient ein kristallines SiC Pulver (α- oder β-SiC) von hoher Reinheit (> 95%) mit hoher spezifischer Oberfläche, vorzugsweise > 5 m²/g. Dieses Pulver wird unter Einsatz gebräuchlicher Dispergiertechniken wie z. B. Rühren, Ultraschalldispergierung oder auch durch Mahlen zu einem niedrigviskosen, hochfeststoffhaltigen SiC Schlicker verarbeitet, dem vorzugsweise anorganische Sinterhilfsmittel aus der II. oder III. Hauptgruppe des Periodensystems (Bor oder Borverbindungen wie z.B. B₄C; Aluminium oder Aluminiumverbindungen wie z.B. AlN; Berylliumverbindungen wie z.B. Be₂C) in Form feiner Pulver (spezifische Oberfläche bevorzugt > 1m²/g) in Konzentrationen zwischen 0,1 Gew.% bis 2,0 Gew.% zugesetzt werden, vorzugsweise liegt die Konzentration von B, Al oder Be bei < 1,0 Gew.%, besonders bevorzugt zwischen 0,2 und 0,7 Gew.%.

Erfindungsgemäß wird als Festschmierstoff ein Kohlenstoffpulver, in der Regel in Form von Grafit verwendet, der eine Primärkorngröße < 10 µm aufweist. Das Kohlenstoffpulver wird in den Schlicker eingearbeitet, wobei der hydrophile Charakter der Kohlenstoffoberfläche bei üblicher Dispergiertechnik eine homogene Verteilung im Schlicker ermöglicht, so daß schließlich eine homogene Verteilung des Kohlenstoffs im Sinterkörper erreicht wird.

Der Kohlenstoff wird dem wässerigen SiC Schlicker in der gewünschten Menge zugegeben und mit üblichen Mischtechniken (Rühren, Hochenergierührern oder Ultraschallbehandlung) untergearbeitet. Alternativ zu diesen Methoden kann die Homogenisierung der Mischung auch durch Mahlen erfolgen, vorzugsweise wird autogen aufgemahlen, d.h. unter Verwendung von Mahlbehältern und Mahlkörpern aus SiC.

In den so erhaltenen Basisschlicker bestehend aus SiC, anorganischem Sinterhilfsmittel und Kohlenstoff werden außerdem die für die weiteren Produktionsschritte üblichen organischen Hilfsstoffe wie Binder (z.B. Polyvinylalkohol), Plastifizierer (z.B. organische Fettsäuren) sowie ein Kohlenstoff-Spender (z. B. Kohlenhydrate, Phenolharz, hochdisperser Ruß), der den notwendigen Kohlenstoff zur Verfügung stellt, um die auf den SiC-Körnern vorhandene SiO₂-Schicht zu reduzieren, eingearbeitet.

Für die Formgebung über Trockenpressen wird der Schlicker sprühgetrocknet, da dadurch die homogene Kohlenstoffverteilung im SiC stabilisiert wird und lange Lagerzeiten ermöglicht werden. Aus dem so erhaltenen Granulat wird über bekannte Preßverfahren wie uniaxiales Pressen oder Kaltisostatpressen ein Formkörper hergestellt. Anschließend wird dieser Formkörper einer üblichen thermischen Behandlung bei Temperaturen < 1000°C in inerter oder reduzierender Atmosphäre (Pyrolyse) unterzogen, wodurch aus den C-Precursoren der amorphe Kohlenstoff zur Reduzierung der SiO₂-Schichten entsteht. Die pyrolisierten Formkörper werden anschließend gesintert.

Um beim Sintern das erfindungsgemäße Gefüge mit der bimodalen SiC-Kornverteilung und den homogen verteilten Kohlenstoffeinschlüssen zu erhalten, ist eine sorgfältige Kontrolle der Sinterbedingungen notwendig. Diese bevorzugten Sinterbedingungen stellen sich folgendermaßen dar: die entbinderten Formkörper werden in Grafittiegeln bei einem Unterdruck zwischen 100 und 950 mbar mit einer Aufheizgeschwindigkeit zwischen 25 und 500 °C/h auf eine Sintertemperatur zwischen 2100°C und 2150 °C aufgeheizt und bei dieser Temperatur zwischen 15 und 120 min. gehalten. Bei diesen Sinterbedingungen entwickelt sich das erfindungsgemäße Zielgefüge, das sich dadurch auszeichnet, daß weniger als 50 Flächenprozent aus SiC Körnern bestehen, die eine mittlere Korngröße < 10 µm aufweisen, der andere Anteil aber aus größeren, plattenförmigen SiC-Kristallen mit einer mittleren Korngröße zwischen 10 und 1000 µm besteht. Das Gefüge zeichnet sich weiterhin dadurch aus, daß der eingebrachte Kohlenstoff homogen verteilt im Gefüge vorliegt, wobei die einzelnen Kohlenstoffteilchen sowohl an SiC-Korngrenzen liegen können, aber auch im Inneren von plattenförmigen SiC-Kristalliten eingeschlossen sein können. Durch die gute Einbindung des Kohlenstoffs in die SiC-Matrix übersteht die Werkstoffoberfläche auch intensive mechanische/tribologische Belastungen und eine Ultraschallbehandlung.

Aufgrund der beschriebenen Gefügeausprägung des erfindungsgemäßen SiC-Kohlenstoff-Kompositwerkstoffs, ist der Werkstoff für tribologische Anwendungen unter hohen Belastungen, wie auch in tribologisch komplexen Situationen besonders geeignet. Insbesondere geeignet ist er für Anwendungen, bei denen ein korrosiver Angriff durch heißes Wasser auch in Verbindung mit hohen Drücken auftritt.

Die erfindungsgemäßen SiC-Kohlenstoff-Kompositwerkstoffe eignen sich deshalb insbesondere zur Herstellung eines Bauteils für eine Dichtungsanwendung, vorzugsweise eine Gleitringdichtung. Insbesondere eignet sich der Werkstoff als Gleitring und Gegenring in hart/hart-Paarungen von Gleitringdichtungen. Besonders bevorzugt werden diese Werkstoffe für Anwendungen wo korrosiver Angriff durch heißes Wasser in Verbindung mit hohen Drücken auftritt.

Insbesondere eignet sich der erfindungsgemäße Werkstoff zur Herstellung von Bauteilen, die in Pumpen und Dichtungen eingesetzt werden, wobei das zu fördernde Fluid zu > 95% aus Wasser, bevorzugt aus Wasser mit einer Temperatur > 70 °C besteht. Der erfindungsgemäße Werkstoff eignet sich ferner zur Herstellung eines Gleitlagers.

Die folgenden Beispiele dienen der weiteren Erläuterung der Erfindung.

### Beispiel 1

Herstellung eines Formkörpers mit bimodalem Gefüge und einem niedrigen Grafitgehalt (< 10 Gew.%) unter Verwendung eines feinkörnigen Grafits (maximale Korngröße < 10 µm)

Einem feinkörnigen SiC mit einer Partikelgröße d₅₀ von 0,65 µm, einer spezifischen Oberfläche nach BET von 12,5 m²/g, und einem Restsauerstoffgehalt von 0,6 Gew.% wird unter Verwendung von entionisiertem Wasser, das durch Zusatz von Ammoniak auf pH 9 eingestellt wurde, ein Schlicker mit 65 Gew.% Feststoffanteil hergestellt. Unter ständigem Rühren mit einem Blattrührer werden 0,64 Gewichtsteile B₄C bezogen auf SiC hinzugefügt und in einem Zwangsmischer (Mischer "Ultraturrax"; Fa. IKA GmbH & Co KG, D-79217 Staufen) 5 min lang homogenisiert. Zu diesem Basisschlicker werden anschließend 7 Gewichtsteile Grafit KS6 (käuflich erhältlich bei Fa. Timcal, CH-5643 Sins, Schweiz) mit einer maximalen Partikelgröße von 10 µm und einer mittleren Partikelgröße von 5 µm zugegeben und wiederum für 5 min mit dem Zwangsmischer homogenisiert. Zu diesem Schlicker werden 2,5 Gewichtsteile Zucker als C-Donor zugegeben sowie eine Mischung aus Polyvinylalkohol (1 Gewichtsteil) und Zusoplast® (2 Gewichtsteile) als Binder/Preßhilfsmittel. Mit dem Blattrührer wird der Schlicker für weitere 15 min homogenisiert. Aus dem Schlicker wird über Sprühtrocknung unter Luft ein Granulat mit einer mittleren Granulengröße von 70 µm hergestellt.

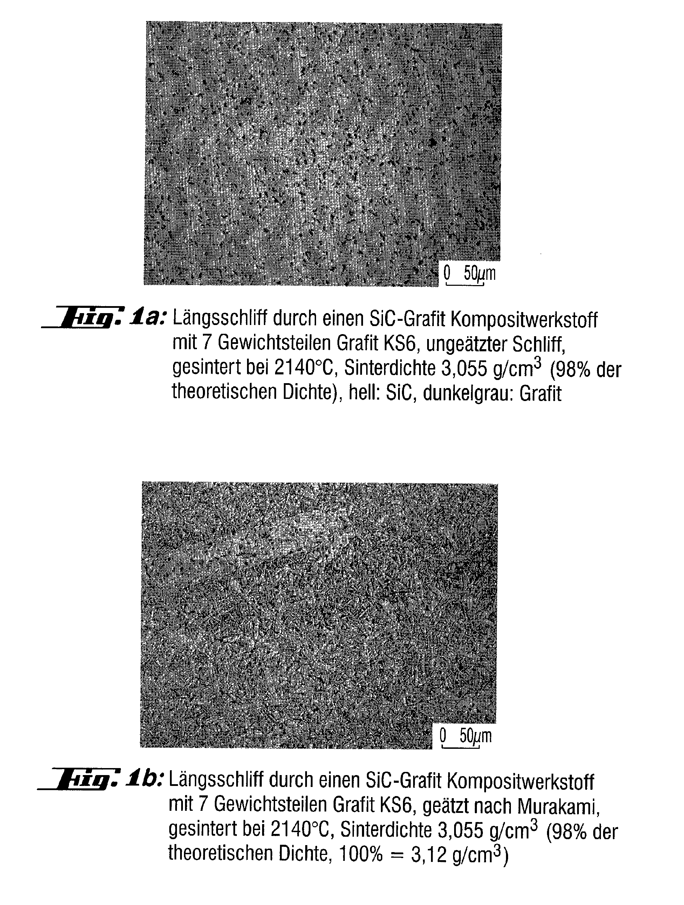

Durch Gesenkpressen bei 100 MPa stellt man einen Formkörper her, der eine Pressdichte von 1,80 g/cm³ aufweist. Die Preßteile werden in einem Verkokungsofen zur schonenden Entfernung der organischen Hilfsstoffe sowie zur Pyrolyse des C-Donors Zucker unter strömendem Argon 12 Stunden bei 800°C getempert. Die entbinderten Formkörper werden auf Raumtemperatur abgekühlt, danach in einen Grafitrohrofen eingesetzt und schließlich für 30 min. bei 2140°C unter einem Druck von 20 mbar Argon drucklos gesintert. Die Sinterkörper weisen nach dem Abkühlen eine Dichte von 3,07 g/cm³ auf, was 99% der theoretischen Dichte entspricht. Die Sinterkörper haben während des Sinterns eine lineare Schrumpfung von 17,5% erfahren. Eine typische Ausprägung des Gefüges von Beispiel 1 ist in Fig. 1a und 1b dargestellt. Fig. 1a zeigt eine Mikroaufnahme eines polierten, ungeätzten Schliffs. Das Gefüge ist insgesamt sehr dicht und frei von Poren > 30 µm. Fig. 1a dokumentiert, daß die Grafitpartikel gleichmäßig und homogen im Gefüge verteilt sind und eine mittlere Korngröße < 10 µm besitzen. Um die Grafitpartikel sind keinerlei Risse zu erkennen. Fig. 1b zeigt eine Mikroaufnahme eines polierten, mit Murakami-Lösung geätzten Schliffs desselben Werkstoffs. Das bimodale Gefüge ist deutlich zu erkennen, wobei der Grobkornanteil plattenförmig ausgebildet ist und mehr als 50% des Flächenanteils des SiC-Gefüges ausmacht und eine mittlere Korngröße > 10 µm besitzt (vergleiche Tabelle 1). Der Feinkornanteil ist äquiaxial ausgebildet und besitzt eine mittlere Korngröße < 10 µm. Außerdem ist aus Fig. 1b ersichtlich, daß sich die Grafitpartikel sowohl an SiC-Korngrenzen als auch im Inneren von SiC-Körnern befinden. Das Ergebnis der Gefügeanalyse nach Korngrößenklassen ist in Tabelle 1 dargestellt.

**Tabelle 1:**

| Häufigkeitsverteilung der SiC-Korngrößen (gemessen nach dem Linienschnittverfahren) | | |
|---|---|---|
| | Beispiel 1 | Beispiel 3 |
| Korngrößenklasse [µm] | Flächenhäufigkeit [%] | Flächenhäufigkeit [%] |
| 0-10 | 31 | 45 |
| 10-20 | 39 | 42 |
| 20-30 | 17 | 8 |
| 30-40 | 11 | 4 |
| > 40 | 2 | 1 |

Bei dieser Auswertung werden die größten Körner der Grobkornfraktion nicht erfaßt. Diese sind in Fig. 1 c zu erkennen. Sie erhöhen den Grobkornanteil des erfindungsgemäßen Werkstoffs weiter. Fig. 1 c zeigt sehr deutlich das trotz des C-Zusatzes erfolgte völlig unerwartete Korngrenzwachstum.

### Beispiel 2:

Herstellung eines Formkörpers mit bimodalem Gefüge und einem niedrigen Grafitgehalt (< 10 Gew.%) unter Verwendung eines grobkörnigen Grafits (> 20 µm).

Einem feinkörnigen SiC mit einer Partikelgröße d₅₀ von 0,65 µm, einer spezifischen Oberfläche nach BET von 12,5 m²/g, und einem Restsauerstoffgehalt von 0,6 Gew.% wird unter Verwendung von entionisiertem Wasser, das durch Zusatz von Ammoniak auf pH 9 eingestellt wurde, ein Schlicker mit 65 Gew.% Feststoffanteil hergestellt. Unter ständigem Rühren mit einem Blattrührer werden 0,64 Gewichtsteile B₄C bezogen auf SiC hinzugefügt und in einem Zwangsmischer (Mischer "Ultraturrax", FA. IKA) 5min. lang homogenisiert. Zu diesem Basisschlicker werden anschließend 7 Gewichtsteile Grafit K5-75 (Fa. Timcal) mit einer maximalen Partikelgröße von 100 µm und einer mittleren Partikelgröße von ca. 40 µm zugegeben und wiederum für 5 min mit dem Zwangsmischer homogenisiert. Zu diesem Schlicker werden 2,5 Gewichtsteile Zucker als C-Donor zugegeben sowie eine Mischung aus Polyvinylalkohol (1 Gewichtsteil) und Zusoplast® (2 Gewichtsteile) als Binder/Preßhilfsmittel. Mit dem Blattrührer wird der Schlicker für weitere 15 min homogenisiert. Aus dem Schlicker wird über Sprühtrocknung unter Luft ein Granulat mit einer mittleren Granulengröße von 70 µm hergestellt.

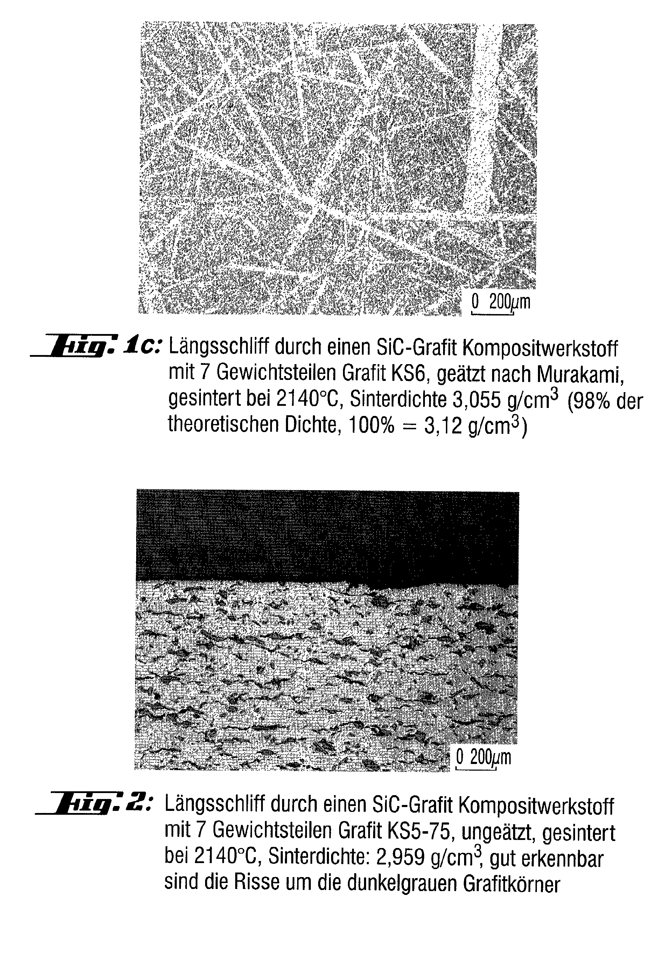

Durch Gesenkpressen bei 100 MPa stellt man einen Formkörper her, der eine Pressdichte von 1,81 g/cm³ aufweist. Die Preßteile werden in einem Verkokungsofen zur schonenden Entfernung der organischen Hilfsstoffe sowie zur Pyrolyse des C-Donors Zucker unter strömendem Argon 12 Stunden bei 800°C ausgeheizt. Die entbinderten Formkörper werden auf Raumtemperatur abgekühlt, danach in einen Grafitrohrofen eingebaut und schließlich für 30 min. bei 2140°C unter einem Druck von 20 mbar Argon drucklos gesintert. Die Sinterkörper weisen nach dem Abkühlen eine Dichte von 2,959 g/cm³ auf, was 94,2 % der theoretischen Dichte entspricht. In Fig. 2 ist ein keramographischer Schliff eines polierten Querschnittes abgebildet. Man erkennt deutlich die Risse, die sich um die groben Grafitpartikel gebildet haben.

### Beispiel 3

Herstellung eines Formkörpers mit bimodalem Gefüge und einem hohen Grafitgehalt (> 10%) unter Verwendung eines feinkörnigen Grafits (<10 µm)

Einem feinkörnigen SiC mit einer Partikelgröße d₅₀ von 0,65 µm, einer spezifischen Oberfläche nach BET von 12,5 m²/g, und einem Restsauerstoffgehalt von 0,6 Gew.% wird unter Verwendung von entionisiertem Wasser, das durch Zusatz von Ammoniak auf pH 9 eingestellt wurde, ein Schlicker mit 65 Gew.% Feststoffanteil hergestellt. Unter ständigem Rühren mit einem Blattrührer werden 0,64 Gewichtsteile B₄C bezogen auf SiC hinzugefügt und in einem Zwangsmischer (Mischer "Ultraturrax"; Fa. IKA) 5min. lang homogenisiert. Zu diesem Basisschlicker werden anschließend 15 Gewichtsteile Grafit KS6 (Fa. Timcal) mit einer maximalen Partikelgröße von 10 µm und einer mittleren Partikelgröße von 5 µm zugegeben und wiederum für 5 min mit dem Zwangsmischer homogenisiert. Zu diesem Schlicker werden 2,5 Gewichtsteile Zucker als C-Donor zugegeben sowie eine Mischung aus Polyvinylalkohol (1 Gewichtsteil) und Zusoplast® (2 Gewichtsteile) als Binder/Preßhilfsmittel. Mit dem Blattrührer wird der Schlicker für weitere 15 min homogenisiert. Aus dem Schlicker wird über Sprühtrocknung unter Luft ein Granulat mit einer mittleren Granulengröße von 70 µm hergestellt.

Durch Gesenkpressen bei 100 MPa stellt man einen Formkörper her, der eine Pressdichte von 1,78 g/cm³ aufweist. Die Preßteile werden in einem Verkokungsofen zur schonenden Entfernung der organischen Hilfsstoffe sowie zur Pyrolyse des C-Donors Zucker unter strömendem Argon 12 Stunden bei 800°C ausgeheizt. Die auf Raumtemperatur abgekühlten entbinderten Formkörper werden anschließend in Grafittiegeln, die in die Heizzone eines Grafitrohrofens eingesetzt werden für 30 min. bei 2175°C in einem Vakuum von 20 mbar gesintert. Die Sinterkörper weisen nach dem Abkühlen eine Dichte von 2,855 g/cm³ auf, was 94 % der theoretischen Dichte entspricht.

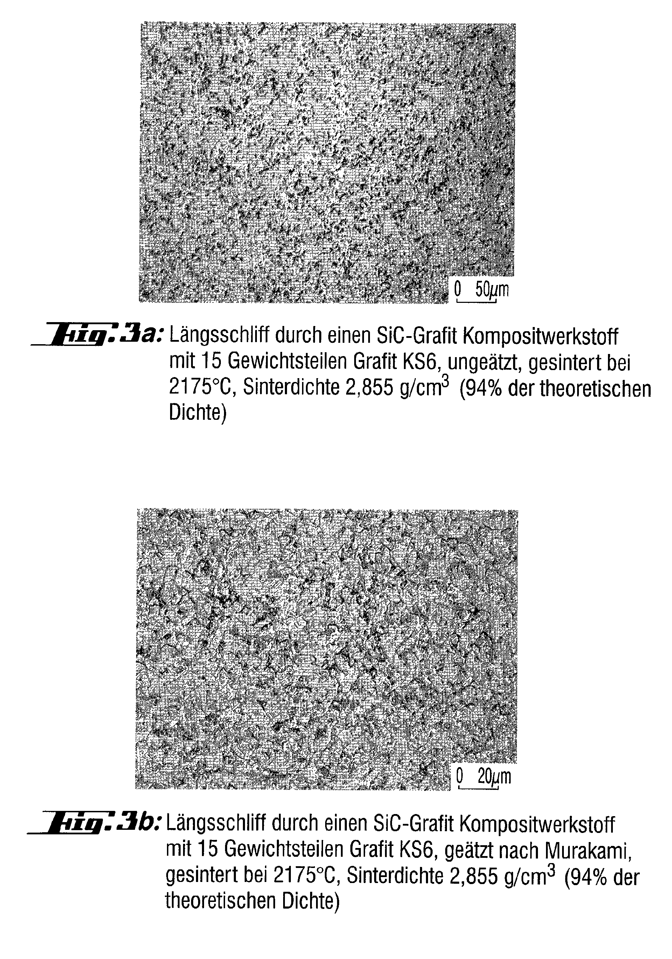

In Fig. 3a ist ein polierter, ungeätzter keramographischer Schliff des Werkstoffs abgebildet. In Fig. 3b ist ein geätzter Schliff (Murakami-Lösung) zur Verdeutlichung der Ausbildung des SiC-Gefüges abgebildet. Das Gefüge ist frei von Poren > 50 µm. Der Grafit ist homogen im Sinterkörper verteilt und befindet sich primär an den SiC-Korngrenzen. Das bimodale SiC-Gefüge ist im geätzten Schliff deutlich zu erkennen. Das Ergebnis der Gefügeanalyse nach Korngrößenklassen ist in Tabelle 1 dargestellt.

## Patentansprüche

1. Keramischer Verbundwerkstoff einer Dichte > 90 % der theoretischen Dichte auf Basis von SiC und Kohlenstoff mit einem Siliciumcarbidanteil zwischen 99,9 Gew.% und 70 Gew.% und einem Kohlenstoffanteil zwischen 0,1 Gew.% und 30 Gew.%, wobei das SiC ein Mikrogefüge mit einer bimodalen Kornstruktur besitzt, **dadurch gekennzeichnet, daß**
(a) die mittlere Korngröße aller SiC-Körner > 10 µm beträgt
(b) die bimodale Kornstruktur des SiC-Mikrogefüges gebildet wird aus einer äquiaxialen Feinkornfraktion mit einer mittleren Korngröße von < 10 µm und einem Anteil zwischen 10 und 50 Flächenprozent und einer Grobkornfraktion mit einer mittleren Korngröße zwischen 10 und 1000 µm und einem Anteil zwischen 50 und 90 Flächenprozent jeweils gemessen auf einer polierten, ebenen Schlifffläche und daß
(c) der Kohlenstoff eine mittlere Korngöße von < 10 µm besitzt.

2. Keramischer Verbundwerkstoff nach Anspruch 1, **dadurch gekennzeichnet, daß** der SiC-Grobkornanteil aus plattenförmigen Körnern mit einem Streckungsgrad > 3 besteht.

3. Keramischer Verbundwerkstoff nach Anspruch 1 oder 2, **dadurch gekennzeichnet, daß** die Kohlenstoffpartikel eine äquiaxiale Form besitzen und an den SiC-Korngrenzen (intergranular) oder im Inneren von SiC-Körnern (intragranular) angeordnet sind.

4. Keramischer Verbundwerkstoff nach einem oder mehreren der Ansprüche 1 bis 3, **dadurch gekennzeichnet, daß** die relative Dichte des Verbundwerkstoffs > 93 % der theoretischen Dichte, bevorzugt > 95% der theoretischen Dichte beträgt.

5. Keramischer Verbundwerkstoff nach einem oder mehreren der Ansprüche1 bis 4, **dadurch gekennzeichnet, daß** der Kohlenstoffanteil zwischen 2 und 10 Gew.%, bevorzugt zwischen 5 und 8 Gew.% beträgt.

6. Keramischer Verbundwerkstoff nach einem oder mehreren der Ansprüche 1 bis 4, **dadurch gekennzeichnet, daß** der Kohlenstoffanteil > 13 bis zu 30 Gew.% beträgt.

7. Keramischer Verbundwerkstoff nach einem oder mehreren der Ansprüche 1 bis 6, **dadurch gekennzeichnet, daß** der Kohlenstoffanteil aus Grafit besteht.

8. Keramischer Verbundwerkstoff nach Anspruch 7, **dadurch gekennzeichnet, daß** der Kohlenstoff als kristalliner Grafit ausgebildet ist und eine mittlere Korngröße besitzt, die kleiner ist, als die mittlere Korngröße des Grobkornanteils des SiC-Gefüges und vorzugsweise der mittleren Korngröße des Feinkornanteils des SiC-Gefüges entspricht.

9. Verfahren zur Herstellung eines keramischen Verbundwerkstoffs, **dadurch gekennzeichnet, daß** aus einem kristallinen SiC Pulver und Wasser ein wässeriger Schlicker hergestellt wird, dem ein Kohlenstoffträger in einer derartigen Konzentration zugesetzt wird, daß im fertigen Sinterkörper zwischen 1 und 30 Gew.% Kohlenstoff vorhanden sind, und die für die Drucklossinterung von SiC gebräuchlichen Sinterhilfsmittel und ggf. organischen Hilfsstoffe in den üblichen Mengen zugefügt werden, aus diesem Schlicker durch eine übliche Granulationsmethode wie z.B. Sprühtrocknen ein Granulat erzeugt wird und aus dem Granulat über bekannte Formgebungstechniken ein Formkörper hergestellt wird, der zur Einstellung eines erfindungsgemäßen Zielgefüges drucklos gesintert wird.

10. Verwendung eines keramischen Verbundwerkstoffes gemäß einem der Ansprüche 1 bis 8 zur Herstellung eines Bauteils, welches in einer Pumpe oder einer Dichtung eingesetzt wird.

11. Verwendung eines keramischen Verbundwerkstoffes gemäß einem der Ansprüche 1 bis 8 zur Herstellung einer Gleitringdichtung.

12. Verwendung eines keramischen Verbundwerkstoffes gemäß einem der Ansprüche 1 bis 8 zur Herstellung einer Gleitringdichtung mit einem Gleitring und einem Gegenring aus gleichem Material.

13. Verwendung eines keramischen Verbundwerkstoffes gemäß einem der Ansprüche 1 bis 8, zur Herstellung eines Gleitlagers.
